# EUROPÄISCHE PATENTSCHRIFT

(11) **EP 4 314 936 B1**
(45) Veröffentlichungstag und Bekanntmachung des Hinweises auf die Patenterteilung: **19.03.2025**
(21) Anmeldenummer: 22718224.3
(22) Anmeldetag: 29.03.2022
(51) Int. Cl.: G02B 27/01, G02B 7/182

(54) **VERFAHREN ZUR MONTAGE EINES HEAD-UP-DISPLAYS, SOWIE HEAD-UP-DISPLAY**
METHOD FOR ASSEMBLING A HEAD-UP DISPLAY, AND HEAD-UP DISPLAY
PROCÉDÉ D'ASSEMBLAGE D'UN AFFICHAGE TÊTE HAUTE, ET AFFICHAGE TÊTE HAUTE

(30) Priorität: 01.04.2021 DE 102021108407
(43) Veröffentlichungstag der Anmeldung: 07.02.2024
(73) Patentinhaber: Valeo Schalter und Sensoren GmbH, 74321 Bietigheim-Bissingen (DE)
(72) Erfinder: SIMONIS, Karl, 74321 Bietigheim-Bissingen (DE); SALMANOGLU, Oezguer, 74321 Bietigheim-Bissingen (DE); DILAVER, Fatih, 74321 Bietigheim-Bissingen (DE); KUNTZE, Daniel, 74321 Bietigheim-Bissingen (DE)
(74) Vertreter: Ralf, Thorge
(86) Internationale Anmeldenummer: PCT/EP2022/058200
(87) Internationale Veröffentlichungsnummer: WO 2022/207598

(56) Entgegenhaltungen:
- DE-U1- 202020 107 309
- JP-A- 2020 138 673
- US-A1- 2013 155 520

## Beschreibung

Ein Aspekt der Erfindung betrifft ein Verfahren zur Montage eines Head-up-Displays. Ein weiterer Aspekt der Erfindung betrifft ein Head-up-Display für ein Kraftfahrzeug.

Head-up-Displays in Kraftfahrzeugen weisen üblicherweise ein Gehäuse auf. Dieses kann aus mehreren Teilbereichen ausgebildet sein. Beispielsweise kann es in diesem Zusammenhang ein Deckelmodul und ein Bodenmodul aufweisen. Diese beiden Komponenten können zusammengefügt werden. Beispielsweise können hier Steckverbindungen oder Schnappverbindungen oder Schraubverbindungen und dergleichen vorgesehen sein. Das Deckelmodul weist diesbezüglich ein Außengehäuse auf. Ebenso kann das Bodenmodul ein Außengehäuse aufweisen. Diese beiden Teile in Form der Außengehäuse beziehungsweise der Schalen bilden dann auch das gesamte Gehäuse des Head-up-Displays. Sie sind diesbezüglich somit äußere Sichtbauteile des Head-up-Displays. Üblicherweise ist in einem Head-up-Display eine Bilderzeugungseinheit angeordnet. Diese erzeugt die Bilder, die mit dem Head-up-Display an eine dazu externe Projektionsfläche, wie beispielsweise eine Scheibe des Kraftfahrzeugs, projiziert werden können. Zusätzlich weist ein Head-up-Display im Inneren des Gehäuses zumindest einen Spiegel auf. Die von der Bilderzeugungseinheit erzeugten Lichtstrahlen werden von diesem Spiegel reflektiert. Bei Head-up-Displays kann jedoch auch der Verbau von zwei separaten Spiegeln in dem Inneren des Gehäuses vorgesehen sein. Dadurch wird eine mehrfache Umlenkung beziehungsweise eine mehrfache Reflexion der Lichtstrahlen, die von der Bilderzeugungseinheit erzeugt werden, durchgeführt. Dabei wird ein erster Spiegel, der im Strahlengang von der Bilderzeugungseinheit zu einem Austrittsfenster des Head-up-Displays näher zur Bilderzeugungseinheit angeordnet ist, auch als Faltspiegel bezeichnet. Mit dem diesbezüglich dem Strahlengang nachgeordneten zweiten Spiegel wird ein Umlenken der Lichtstrahlen insbesondere hin zu diesem Austrittsfenster des Head-Up-Displays durchgeführt. Um die Lichtumlenkung und auch somit die Lichtabstrahlung sehr präzise durchführen zu können und da somit auch die Bilddarstellung scharf erfolgen kann, ist die Anordnung der Spiegel, insbesondere eines diesbezüglich ersten Spiegels, in dem Gehäuse sehr exakt erforderlich. Bei der Montage des Head-up-Displays können diesbezüglich jedoch unerwünschte Positionstoleranzen auftreten.

So ist es bekannt, dass ein derartiger erster Spiegel beispielsweise mit einem zusätzlichen Deckel auf eine optische Kammer des Head-up-Displays, die im Inneren des Gehäuses angeordnet ist, mit einer Schnappverbindung befestigt wird oder auf diese optische Kamera geklebt wird. Bei beiden Möglichkeiten ist jedoch die Toleranzkette über diese optische Kammer sehr lang. Dies hat zur Folge, dass eine dadurch entstehende Spiegelverkippung eine falsche virtuelle Bildlage ergibt. Bei der Vorgehensweise mit dem Ankleben des Spiegels an die optische Kammer kann über die unterschiedlichen Ausdehnungskoeffizienten der Materialien eine Wölbung des Spiegels auftreten und dadurch eine Verzerrung des zu erzeugenden und zu projizierenden Bilds auftreten. Bei der verschnappten Möglichkeit treten Toleranzen auf, welche bei Temperaturunterschieden und mit fortschreibender Lebensdauer des Head-up-Displays zu Positionstoleranzen führen und dadurch auch ein Klappern einhergehen kann. Diesbezüglich können in dem Zusammenhang somit auch unerwünschte Geräusche erzeugt werden. Ebenfalls kann ein Zittern des erzeugten Bilds auftreten.

Head-up-Displays sind zum Beispiel aus den Druckschriften JP2020138673 A, US2013155520 A1 und DE202020107309 U1 bekannt.

Es ist Aufgabe der vorliegenden Erfindung, ein Verfahren zur Montage eines Head-up-Displays, sowie ein derartiges Head-up-Display zu schaffen, bei welchem die Positionierung eines ersten Spiegels im Inneren des Head-up-Displays verbessert ist.

Diese Aufgabe wird durch ein Verfahren und ein Head-up-Display gemäß den unabhängigen Ansprüchen gelöst.

Ein Aspekt der Erfindung betrifft ein Verfahren zur Montage eines Head-up-Displays, aufweisend folgende Schritte:
- Bereitstellen eines ersten Spiegels des Head-Up-Displays;
- Anbringen eines ersten, elastischen Kompressionselements an einem ersten Randbereich einer Rückseite des ersten Spiegels und Anbringen eines zweiten, elastischen Kompressionselements an einem zweiten Randbereich der Rückseite des ersten Spiegels;
- Einbringen des ersten Spiegels mit den daran angeordneten Kompressionselementen in ein Deckelmodul eines Gehäuses des Head-up-Displays und Einstellen einer Vormontageposition des ersten Spiegels in dem Deckelmodul, in welcher die Kompressionselemente an Stützflächen des Deckelmoduls anliegen;
- Anbringen eines zum Deckelmodul separaten Bodenmoduls des Gehäuses an dem Deckelmodul, wobei beim Verbinden des Bodenmoduls mit dem Deckelmodul eine Vorderseite des ersten Spiegels von Kontaktelementen des Bodenmoduls kontaktiert wird und beim weiteren Zusammenfügen des Bodenmoduls mit dem Deckelmodul der erste Spiegel in eine Endmontageposition gedrückt wird, wobei dazu die Kompressionselemente komprimiert werden und der erste Spiegel an die Stützflächen des Deckelmoduls angedrückt wird.

Durch eine derartige Ausgestaltung können die eingangs erläuterten Probleme bezüglich der sicheren und exakten Positionierung gerade dieses ersten Spiegels im Inneren des Head-up-Displays zumindest deutlich reduziert werden. Durch diese Vorgehensweise ist es nunmehr sehr einfach möglich, den mit den Kompressionselementen vorkonfigurierten ersten Spiegel in die Vormontageposition einzubringen. Es ist daher diesbezüglich noch nicht erforderlich, eine exakte Positionierung des ersten Spiegels in der Endposition an einem diesbezüglichen Gehäuseteil vorzunehmen, bevor das Deckelmodul mit dem Bodenmodul zusammengefügt wird. Die Vormontageposition ist insbesondere durch ein einfaches Einlegen des ersten Spiegels in das Deckelmodul ermöglicht. Definiert ist diese Vormontageposition somit noch nicht die Endposition beziehungsweise die Endmontageposition. Daher kann durch diese Vorgehensweise ein schnelles Montageszenario unterstützt werden, da diese Vormontageposition auch sehr einfach und schnell eingestellt werden kann. Insbesondere wird dazu das Deckelmodul quasi auf den Kopf gestellt. Das wannenförmige Deckelmodul wird somit so positioniert, dass die Wannenöffnung nach oben oder im Wesentlichen nach oben zeigt. Dadurch ist es besonders einfach, von oben den vorkonfigurierten ersten Spiegel in das Innere des Deckelmoduls einzubringen und diesbezüglich die Vormontageposition sehr einfach und zielgerichtet erreichen zu können. Es dadurch ein einfaches Einstellen des ersten Spiegels in das Deckelmodul als Vormontageposition ermöglicht.

Darüber hinaus ist es durch die Kompressionselemente dann auch erreicht, dass der erste Spiegel nicht in direkten Kontakt mit den Stützflächen tritt. Dies erfolgt insbesondere nur indirekt über die Kompressionselemente. Damit kann der erste Spiegel auch vor unerwünschten Beeinflussungen insbesondere auf der Rückseite durch die Stützflächen geschützt werden. Durch die diesbezüglich elastischen Kompressionselemente kann der erste Spiegel somit dann auch im Weiteren vielfältig relativ zu den Stützflächen bewegt werden. Denn die bestimmungsgemäß vorgesehene Kompressionseigenschaft der Kompressionselemente ermöglicht im weiteren Montageszenario eine diesbezüglich gewünschte und definierte Relativbewegung des ersten Spiegels auch zu den Stützflächen. Dies ist bei dem vorgeschlagenen Montageszenario besonders vorteilhaft. Denn somit kann insbesondere bei der Montage des Deckelmoduls mit dem Bodenmodul eine automatische Positionsänderung des ersten Spiegels ausgehend von der Vormontageposition in eine Endmontageposition durchgeführt werden. Diesbezüglich kann dies durch die Kompressionsmöglichkeit der Kompressionselemente sehr gezielt erreicht werden. Damit kann in sehr einfacher und über das Zusammenfügen des Deckelmoduls mit dem Bodenmodul indirekt erfolgende Verstellen der Position des ersten Spiegels auch sehr exakt die gewünschte Endmontageposition des ersten Spiegels erreicht werden, insbesondere auch in Bezug zu den Stützflächen.

Es wird also bei dem vorgeschlagenen Montageverfahren gezielt gewünscht, dass sich der erste Spiegel aus der Vormontageposition beim Zusammenfügen des Deckelmoduls mit dem Bodenmodul definiert bewegt. Insbesondere wird er diesbezüglich automatisch in die Endmontageposition gedrückt. Da sich die Kompressionselemente auch sehr gleichmäßig verformen lassen, insbesondere komprimieren lassen, wird dadurch die Endmontageposition auch sehr exakt erreicht. Sowohl in der Vormontageposition als auch in der Endmontageposition ist durch das Kompressionselement beziehungsweise die Kompressionselemente eine weitere Vorteilhaftigkeit dahingehend erreicht, dass der erste Spiegel auch gedämpft gelagert an diesen Stützflächen angeordnet wird. Insbesondere können dadurch auch Relativbewegungen zwischen dem ersten Spiegel und den Stützflächen im verbauten Zustand ermöglicht werden, insbesondere auch eine Schwingungsdämpfung erreicht werden.

In einem Ausführungsbeispiel wird der erste Spiegel in der Vormontageposition in das Deckelmodul eingestellt. Dies ist ein besonders einfaches Verbringen des ersten Spiegels in das Deckelmodul. Darüber hinaus ist somit die Vormontageposition auch eine einfach und schnell erreichbare. Ein einfaches Einstellen in das Deckelmodul erfordert somit keine weiteren komplexen Montagevorgänge, um die Vormontageposition zu erreichen. Der erste Spiegel ist in dieser Vormontageposition insbesondere in einer Schrägstellung in dem Deckelmodul angeordnet. Damit kann in vorteilhafter Weise auch ein unerwünschtes Umfallen des ersten Spiegels in der Vormontageposition vermieden werden. Die diesbezüglich eingestellte Stellung bleibt auch relativ sicher erhalten. Der erste Spiegel wird in einem Ausführungsbeispiel beim Einstellen der Vormontageposition mit einer Randkante, insbesondere einer oberen Randkante, auf zumindest eine Auflage des Deckelmoduls aufgestellt. Dadurch ist die diesbezügliche Aufstellposition auch an dieser Randkante entsprechend unterstützt. Somit liegt der Spiegel einerseits mit dieser Randkante direkt auf diesen schmalen, insbesondere stegartigen, Auflagen auf, sodass diesbezüglich durch die Schwerkraft des ersten Spiegels bei diesem Montageszenario der Spiegel auch sicher positioniert werden kann. Andererseits liegt er mit den Kompressionselementen indirekt an den in dieser Montageposition des Deckelmoduls schrägen Stützflächen an.

In einem Ausführungsbeispiel werden die Kompressionselemente als längliche Streifen bereitgestellt. Sie können sich in einem Ausführungsbeispiel über zumindest 60 Prozent, insbesondere zumindest 70 Prozent, der Länge des jeweiligen Randbereichs der Rückseite erstrecken. Insbesondere werden die Kompressionselemente parallel zu einer weiteren Randkante, die den Randbereich begrenzt, auf dieser Rückseite angebracht. Vorteilhaft sind diese Formgebung und Orientierung dahingehend, dass eine streifenförmige direkte Kontaktierung eines Kompressionselements mit einer korrespondierenden Stützfläche ermöglicht ist. Dadurch kann einerseits die Vormontageposition sehr zielgerichtet erreicht werden. Besonders vorteilhaft ist dann jedoch auch die Relativbewegung des ersten Spiegels beim Komprimieren der Kompressionselemente und beim Heranbewegen des ersten Spiegels an die ortsfest angeordneten Stützflächen im weiteren Montageszenario. Eine besonders gleichmäßige Kompression eines Kompressionselements über ihre jeweilige geometrische Ausgestaltung ist dadurch ermöglicht. Vorzugsweise ist die Stützfläche unterbrechungsfrei ausgebildet und ein Kompressionselement liegt mit seiner streifenförmigen, freiliegenden Elementfläche flächig, insbesondere auch vollflächig, an einer derartigen Stützfläche an. Dadurch können die oben genannten weiteren Szenarien bei der Montage des Head-up-Displays vorteilhaft ermöglicht werden.

Darüber hinaus ist durch diese randseitige Anbringung der Kompressionselemente eine relativ bauteilsparende Konstruktion geschaffen, die in besonders vorteilhafter Weise mit den jeweiligen Stützflächen mechanisch wechselwirken kann.

In einem Ausführungsbeispiel werden die Kompressionselemente als Schaumstoffstreifen bereitgestellt. Insbesondere können sie diesbezüglich quaderartig beziehungsweise stabförmig gebildet sein. Gerade die Ausgestaltung als Schaumstoffstreifen ermöglicht eine einfache Handhabung zur Anbringung an dem ersten Spiegel. Andererseits ist dadurch auch die entsprechende gewünschte Kompressionsfähigkeit besonders vorteilhaft erreicht. Nicht zuletzt ist eine Ausgestaltung als Schaumstoff auch dauerhaft funktionell und somit materiell langlebig. Auch im verbauten Endzustand und im dann dauerhaft komprimierten Zustand eines Kompressionselements kann die eingestellte Endmontageposition des ersten Spiegels exakt aufrecht erhalten werden.

In einem Ausführungsbeispiel ist ein Kompressionselement an der Rückseite des ersten Spiegels angeklebt. Die Kompressionselemente sind insbesondere nur an diesen Randbereichen angeordnet.

In einem Ausführungsbeispiel wird beim Verbinden des Bodenmoduls mit dem Deckelmodul zunächst ein Einführen von Einführelementen eines Moduls in korrespondierende Einführaufnahmen des anderen Moduls durchgeführt. Dies bedeutet auch, dass die zunächst separat bereitgestellten Komponenten betreffend das Bodenmodul und das Deckelmodul aufeinander zubewegt werden. Ausgehend von einem diesbezüglichen dann erfolgenden Starten des Zusammenfügens werden die Einführelemente und die Einführaufnahmen aneinander herangeführt. Ist ein diesbezüglicher Montagezustand erreicht, bei welchem dann gerade das Einführen der Einführelemente in die Einführaufnahmen beginnt und somit ein Ineinandergreifen der Einführelemente in die Einführaufnahmen beginnt, ist in diesem Zustand definiert noch vorgesehen, dass die Kontaktelemente beabstandet und somit berührungslos zu einer Vorderseite des ersten Spiegels angeordnet sind. Damit wird erreicht, dass zunächst die erste mechanische Kopplung über die Einführvorrichtung mit den Einführelementen und den Einführaufnahmen greift, bevor bereits Kontaktelemente die Vorderseite kontaktieren und bereits eine Kraft auf den ersten Spiegel ausüben würden. Durch das zunächst erfolgende Ineinandergreifen der Einführelemente und der Einführaufnahmen ist eine Basisposition zwischen dem Bodenmodul und dem Deckelmodul erreicht, die nicht mehr unerwünscht und somit auch nicht mehr umfänglich in einer Ebene senkrecht zu dieser Zusammenfügerichtung zueinander verschoben werden kann, wenn dann im Weiteren Kontaktelemente die Vorderseite des ersten Spiegels berühren. Damit ist dann auch im weiteren Montageszenario das Berühren der Kontaktelemente an der Vorderseite des ersten Spiegels und eine dann im weiteren Montageszenario Ausüben einer Kraft der Kontaktelemente auf die Vorderseite des ersten Spiegels sehr gerichtet und definiert ermöglicht. Denn in dem Zusammenhang bilden dann die bereits ineinander geführten Einführelemente und Einführaufnahmen, die dann noch nicht in dem jeweiligen Einführendzustand miteinander verbunden sind, auch eine mechanische Führung, um das entsprechende Andrücken der Kontaktelemente an die Vorderseite des ersten Spiegels erreichen zu können.

Dadurch wird ein hochwirksames und hochfunktionelles Montagekonzept gerade bei diesem Montagezwischenzustand erreicht. Unerwünschte Positionsverschiebungen von Einzelkomponenten zueinander können dadurch vermieden werden. Gerade das im Nachgang zu erzeugende direkte mechanische Kontaktieren zwischen Kontaktelementen und der Vorderseite des ersten Spiegels kann dadurch sehr präzise und zum genau gewünschten Zeitpunkt während des Montageszenarios ermöglicht werden.

In einem Ausführungsbeispiel wird beim Fortführen des Einführvorgangs der Einführelemente in die Einführaufnahme ausgehend von einem bereits grundsätzlich erreichten Ineinandergreifen dieser Einführelemente in die Einführaufnahmen im Weiteren dann die Vorderseite von den Kontaktelementen mechanisch direkt kontaktiert. Ausgehend von diesem dann erreichten Kontaktierungszustand zwischen den Kontaktelementen und der Vorderseite des ersten Spiegels wird dann beim weiteren Zusammenfügen des Deckelmoduls mit dem Bodenmodul und somit beim dann weiteren Einführen der Einführelemente in die Einführaufnahmen ein Komprimieren der Kompressionselemente automatisch erreicht und dadurch automatisch der erste Spiegel in Richtung der Stützflächen gedrückt. Auch dieses durch die Einführvorrichtung geführte Heranführen der Kontaktelemente an die Vorderseite des ersten Spiegels und im Nachgang dann weiterhin das geführte und dosierte Andrücken der Kontaktelemente an die Vorderseite und einem damit automatisch einhergehenden Komprimieren der Kompressionselemente und einem damit wiederum automatischen Einhergehen des definierten Relativbewegens des ersten Spiegels in Richtung der Stützflächen ermöglicht, dass die Endmontageposition des ersten Spiegels besonders exakt feindosiert erreicht wird. Unerwünschte abrupte Krafteinwirkungen auf den ersten Spiegel und abrupte Positionsverstellungen können dadurch auch vermieden werden.

In einem Ausführungsbeispiel wird bei dem weiteren Einführvorgang von den Einführelementen in die Einführaufnahme beim Zusammenfügen zwischen dem Bodenmodul und dem Deckenmodul automatisch erreicht, dass die Kontaktelemente, die dann bereits an der Vorderseite des ersten Spiegels anliegen, relativ zu der Vorderseite im daran anliegenden Zustand bewegt werden. Durch diese Relativbewegung wird eine Kraft auf den ersten Spiegel erzeugt, die diesen ersten Spiegel in Richtung der Stützflächen bewegt. Da sich durch die elastische Ausgestaltung der Kompressionselemente bei dieser Bewegung des Spiegels die Kompressionselemente komprimieren, ist diese entsprechende Spiegelbewegung zu den Stützflächen hin auch noch besonders vorteilhaft ermöglicht. Kompressionselemente ermöglichen einerseits diese Bewegung, andererseits bilden sie ein Dämpfungselement, die diese Bewegungsführung des Spiegels unterstützen. Dadurch, dass durch die Kompression der Kompressionselemente eine gewisse Gegenkraft erzeugt wird, wird das Bewegen dieses Spiegels besonders vorteilhaft geführt und gerichtet ermöglicht. Darüber hinaus ist durch diese Ausgestaltung auch eine sehr gleichmäßige Bewegung des Spiegels hin zu diesen Stützflächen ermöglicht. Insbesondere wird dadurch in vorteilhafter Weise eine lineare oder eine im Wesentlichen lineare Bewegung des ersten Spiegels hin zu den Stützflächen ermöglicht. Dadurch wird quasi die Endmontageposition als eine zur Vormontageposition parallele Position ermöglicht.

In einem Ausführungsbeispiel wird die Richtung der Kraft aufgrund der schrägen Orientierung der Kontaktelemente in einem Winkel ungleich 0° und ungleich 180° zur Zusammenfügerichtung, in welcher das Bodenmodul mit dem Deckelmodul zusammengeführt wird, erzeugt. Somit ist quasi die Richtung der Kraft, die auf den ersten Spiegel einwirkt, nicht parallel zu der insbesondere linearen Zusammenfügerichtung, in welcher das Bodenmodul mit dem Deckelmodul zusammengefügt wird. Insbesondere ist diese Zusammenfügerichtung auf dem Montageweg zu verstehen, auf welchem die Einführelemente und die Einführaufnahmen ineinandergreifen.

Durch diese Orientierung zwischen der Kraftrichtung und der Zusammenfügerichtung kann ein sehr begünstigtes Montageszenario für den ersten Spiegel zur Verbringung von der Vormontageposition in die Endmontageposition erreicht werden. Es ergibt sich somit auch die Möglichkeit, eine Relativposition zwischen dem Deckelmodul und dem Bodenmodul bei diesem Montageprozess zu erreichen, der insbesondere in linearer Richtung in der Zusammenfügerichtung erfolgt, um gleichzeitig automatisch eine Relativbewegung des ersten Spiegels zu den Stützflächen zu erreichen, die dazu unterschiedlich orientiert ist. Obwohl sich diesbezüglich verschiedene Relativbewegungen bei diesem Zusammenfügen des Deckelmoduls mit dem Bodenmodul gleichzeitig ergeben und somit auch der erste Spiegel dann relativ zum Deckelmodul und zum Bodenmodul bewegt wird, können dennoch das Deckelmodul und das Bodenmodul sehr exakt zusammengefügt werden und gleichzeitig automatisch die Endmontageposition des ersten Spiegels exakt erreicht werden.

In einem Ausführungsbeispiel wird das Zusammenfügen beziehungsweise das Verbinden des Bodenmoduls mit dem Deckelmodul durch eine lineare Zusammenfügebewegung durchgeführt. Dies erfolgt insbesondere zumindest ausgehend von dem Positionszustand, bei welchem die Einführelemente gerade in die Einführaufnahmen eingreifen. Gegebenenfalls kann auch das vorherige aneinander Heranführen zwischen dem Bodenmodul und dem Deckelmodul auch bereits in dieser Zusammenfügerichtung erfolgen und diesbezüglich insbesondere eine lineare Zusammenfügebewegung durchgeführt werden.

In einem Ausführungsbeispiel wird das Bodenmodul mit einem einstückigen Außengehäuse bereitgestellt. Die Kontaktelemente sind an dem Außengehäuse einstückig angeformt. Insbesondere kann bei einem derartigen Ausführungsbeispiel vorgesehen sein, dass dieses Bodenmodul-Außengehäuse mit den Kontaktelementen einstückig hergestellt wird. Beispielsweise kann dies ein Kunststoffbauteil sein. Es kann dann als Spritzgussbauteil hergestellt werden.

In einem Ausführungsbeispiel wird das Bodenmodul mit einem Außengehäuse bereitgestellt und ein dazu separates Bauteil zum Erzeugen einer optischen Kammer in dem Head-up-Display in dem Außengehäuse verbaut. Dieses separate Bauteil kann eine Basisplatte aufweisen und einen an die Basisplatte angeformten Rahmen aufweisen. Dadurch wird ein Schacht beziehungsweise eine Kammer gebildet, die dann auch das Erzeugen einer optischen Kammer in dem Head-up-Display bestimmungsgemäß darstellt.

Möglich ist es auch, dass das Head-up-Display einen zweiten Spiegel aufweist. Dieser ist ein zum ersten Spiegel separater Spiegel. Der zweite Spiegel kann in dem Außengehäuse verbaut sein. Der zweite Spiegel ist bestimmungsgemäß dazu vorgesehen, dass er Licht, welches von dem ersten Spiegel umgelenkt wurde und welches von dem ersten Spiegel zum zweiten Spiegel reflektiert wurde, zu einem Austrittsfenster des Gehäuses des Head-up-Displays umlenkt beziehungsweise reflektiert. Das Bodenmodul, welches in dem genannten Ausführungsbeispiel das Außengehäuse und das separate Bauteil und/oder den zweiten Spiegel aufweist, wird als diesbezüglich mit den Komponenten vormontiertes Bodenmodul bereitgestellt. Dieses vormontierte Bodenmodul kann dann, wie oben dargelegt, mit dem Deckelmodul verbunden werden.

In einem Ausführungsbeispiel kann vorgesehen sein, dass die Kontaktelemente an dem Bauteil, welches zum Erzeugen einer optischen Kammer vorgesehen ist, angeformt sind. Auch dieses Bauteil kann im Ausführungsbeispiel einstückig hergestellt sein. Es kann auch aus Kunststoff hergestellt sein.

Möglich ist es daher, dass Kontaktelemente des Bodenmoduls an dem Außengehäuse ausgebildet sind oder an dem Bauteil ausgebildet sind oder in einem weiteren Ausführungsbeispiel sowohl als Kontaktelemente an dem Bauteil als auch an dem Außengehäuse ausgebildet sind. Jeweils kann hier eine einstückige Ausgestaltung vorgesehen sein.

Ein weiterer Aspekt der Erfindung betrifft ein Head-up-Display für ein Kraftfahrzeug. Das Head-up-Display weist ein Gehäuse auf. Es weist ein Deckelmodul und ein Bodenmodul auf. In dem Gehäuse ist ein erster Spiegel des Head-up-Displays angeordnet, mit welchem Licht einer Bilderzeugungseinheit des Head-up-Displays umlenkbar ist beziehungsweise umgelenkt wird. Insbesondere ist dieser erste Spiegel bestimmungsgemäß dazu vorgesehen, das Licht der Bilderzeugungseinheit zu einem gegebenenfalls vorhandenen zweiten Spiegel des Head-up-Displays umzulenken oder zu einem Austrittsfenster des Head-up-Displays direkt umzulenken, wenn der zweite Spiegel nicht vorhanden ist.

An Randbereichen einer Rückseite des ersten Spiegels sind vorzugsweise elastische Kompressionselemente angeordnet. Im montierten Endzustand des ersten Spiegels in dem Gehäuse liegen diese Kompressionselemente, insbesondere direkt, an Stützflächen des Deckelmoduls an. Das Bodenmodul weist, insbesondere integrierte und somit einstückig damit ausgebildete, Kontaktelemente auf, die an einer zur Reflexion vorgesehenen Vorderseite des ersten Spiegels anliegen, sodass der erste Spiegel mit einer Kraft in Richtung der Stützflächen beaufschlagt ist und dadurch die Kompressionselemente im montierten Endzustand des ersten Spiegels komprimiert sind und der erste Spiegel an die Stützflächen angedrückt ist. Diesbezüglich ist ein indirektes Andrücken ausgebildet, da der erste Spiegel keinen direkten Kontakt zu den Stützflächen aufweist, sondern diesbezüglich die Kompressionselemente dazwischenliegend sind. Die durch ein derartig ausgebildetes Head-up-Display erreichbaren Vorteile wurden bereits oben genannt.

In einem Ausführungsbeispiel sind die Kontaktelemente mit streifenförmigen und schräg zu einer Längsachse des Head-up-Displays orientierten Kontaktflächen ausgebildet. In Richtung dieser Längsachse kann die Zusammenfügerichtung der Module orientiert sein. Diese streifenförmigen Kontaktflächen sind den Randbereichen der Vorderseite des ersten Spiegels zugewandt. Sie liegen insbesondere direkt an diesen Randbereichen der Vorderseite an. Die Randbereiche der Vorderseite sind in einem Ausführungsbeispiel den Randbereichen der Rückseite, an denen die Kompressionselemente angeordnet sind, gegenüberliegend. Somit sind in einem Ausführungsbeispiel auch die Kontaktflächen der Kontaktelemente und die streifenförmigen Kompressionselemente paarweise an gegenüberliegenden Seiten des ersten Spiegels parallel zueinander orientiert. Ein sehr platzsparender und dennoch hochfunktioneller Aufbau ist dadurch ermöglicht. Dies insbesondere auch dahingehend, um den ersten Spiegel von der Vormontageposition in die Endmontageposition exakt verbringen zu können, andererseits die Endmontageposition exakt aufrecht erhalten zu können.

In einem Ausführungsbeispiel sind die Kontaktflächen der Kontaktelemente geglättet. Dies bedeutet, dass sie beispielsweise durch Fräsen oder Polieren in ihrer Oberflächenrauigkeit reduziert sind. Insbesondere ist dies bei einem Ausführungsbeispiel vorgesehen, bei welchem die Kontaktelemente Bestandteil des Außengehäuses des Bodenmoduls sind und insbesondere dann aus Druckguss sind.

In einem Ausführungsbeispiel kann die Vorderseite des ersten Spiegels, insbesondere auch an den Randbereichen, die bestimmungsgemäß zum direkten daran Anliegen der Kontaktelemente des Bodenmoduls vorgesehen sind, mit einer spiegelnden Folie versehen sein. Diese kann dann auch als Zwischenlage zwischen dem Glasmaterial des Spiegels und dem Kontaktelement genutzt werden, insbesondere auch als Gleitfolie für das Kontaktelement. Die Folie kann durch optisches Bonden angebracht sein.

Ein weiterer Aspekt der Erfindung betrifft auch ein Kraftfahrzeug mit einem derartigen Head-up-Display.

Ausführungsbeispiele der Erfindung werden nachfolgend anhand schematischer Zeichnungen näher erläutert. Es zeigen:
- Fig. 1: eine Explosionsdarstellung eines Ausführungsbeispiels eines erfindungsgemäßen Head-up-Displays;
- Fig. 2: eine Explosionsdarstellung des Head-up-Displays gemäß Fig. 1, wobei im Vergleich zu Fig. 1 einige Komponenten bereits miteinander verbunden sind;
- Fig. 3: eine perspektivische Darstellung von Teilkomponenten des Head-up-Displays gemäß Fig. 1 in einem Zwischenmontagezustand;
- Fig. 4: die Komponenten gemäß Fig. 3 in einem zu Fig. 3 nachfolgenden Montagezwischenzustand;
- Fig. 5: eine Darstellung von Komponenten des Head-up-Displays in einem auf Fig. 4 nachfolgenden Montagezwischenzustand;
- Fig. 6: die Darstellung der Komponenten in Fig. 5 in einem auf Fig. 5 nachfolgenden Montagezwischenzustand;
- Fig. 7: eine perspektivische Schnittdarstellung des Montagezustands in Fig. 6; und
- Fig. 8: eine Schnittdarstellung durch das fertig montierte Head-up-Display.

In den Figuren werden gleiche oder funktionsgleiche Elemente mit den gleichen Bezugszeichen versehen.

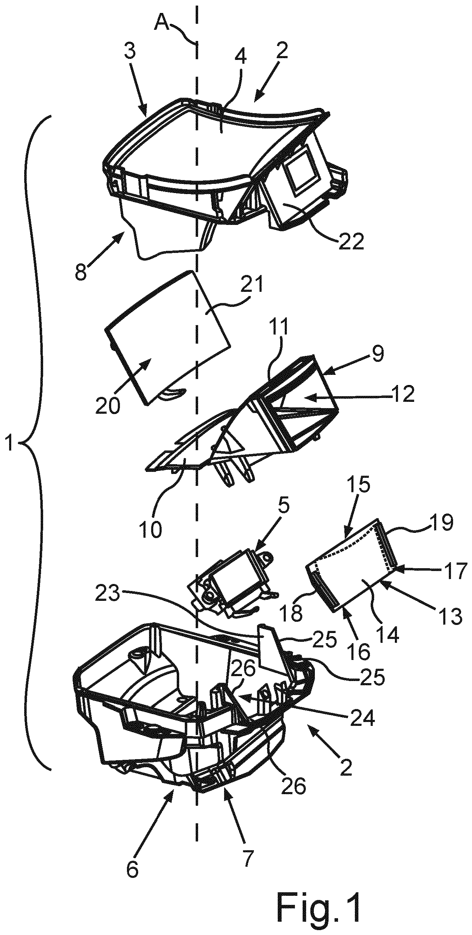

In Fig. 1 ist in einer Explosionsansicht ein Ausführungsbeispiel eines Head-up-Displays 1 gezeigt. Das Head-up-Display 1 kann in einem Kraftfahrzeug verbaut sein. Diesbezüglich können mit dem Head-up-Display 1 optische Informationen beispielsweise auf eine Windschutzscheibe projiziert werden, sodass sie von einem Fahrzeuginsassen, der auf einem Fahrersitz sitzt, im Sichtfeld, wenn er durch die Windschutzscheibe blickt, wahrgenommen werden können. Das Head-up-Display 1 weist ein Gehäuse 2 auf. Dieses Gehäuse 2 weist ein Deckelmodul 3 auf. Das Deckelmodul 3 ist wannenartig ausgebildet. Es kann auch als Schale bezeichnet werden. Es weist im oberen Bereich ein Sichtfenster 4 auf. Durch dieses Sichtfenster 4 treten die Lichtstrahlen, die von einer Bilderzeugungseinheit 5 des Head-up-Displays 1 erzeugt werden, aus dem Gehäuse 2 nach außen. Das Fenster 4 ist hier durch eine transparente Wand gebildet.

Das Head-up-Display 1 weist darüber hinaus ein Bodenmodul 6 auf. Das Bodenmodul 6 weist zumindest ein Außengehäuse 7 auf. Dieses kann mit einem Außengehäuse 8 des Deckelmoduls 3 verbunden werden, um das Gehäuse 2 zu bilden. Die Außengehäuse 7 und 8 sind diesbezüglich separate Teile. So kann das Außengehäuse 7 beispielsweise als Druckgussbauteil ausgebildet sein. Das Außengehäuse 8 kann beispielsweise aus Kunststoff ausgebildet sein. Es kann beispielsweise ein Spritzgussbauteil sein. Die Außengehäuse 7 und 8 können auch als Schalen bezeichnet werden.

Das Head-up-Display 1 weist darüber hinaus ein Bauteil 9 auf. Dieses ist hier eine separate Komponente. Das Bauteil 9 weist im Ausführungsbeispiel eine Bodenplatte 10 und ein Rahmenteil 11 auf. Das Bauteil 9 ist insbesondere einstückig ausgebildet. Es bildet eine Komponente, die eine optische Kammer 12 des Head-up-Displays 1 bereitstellt.

Darüber hinaus weist das Head-up-Display 1 im Ausführungsbeispiel einen ersten Spiegel 13 auf. Der erste Spiegel 13 weist eine Rückseite 14 und eine Vorderseite 15 auf. Die Vorderseite 15 ist dazu vorgesehen und bestimmungsgemäß im Gehäuse 2 angeordnet, dass sie Lichtstrahlen, die von der Bilderzeugungseinheit 5 emittiert werden, umlenkt beziehungsweise reflektiert.

An der Rückseite 14 sind an Randbereichen 16 und 17 hier jeweils ein Kompressionselement 18 und 19 angeordnet. Die Kompressionselemente 18 und 19 sind im Ausführungsbeispiel Schaumstoffteile. Sie sind an diesen Randbereichen 16 und 17 der Rückseite 14 angeordnet. Diesbezüglich kann beispielsweise ein Ankleben vorgesehen sein. Die Kompressionselemente 18 und 19 sind hier strangartige beziehungsweise stangenförmige Bauteile. Sie können entsprechend quaderförmig ausgebildet sein. Darüber hinaus weist im Ausführungsbeispiel das Head-up-Display 1 einen zweiten Spiegel 20 auf. Dieser ist im zusammengesetzten Zustand des Head-up-Displays 1 so angeordnet, dass die vom ersten Spiegel 13 umgelenkten Lichtstrahlen auf eine Vorderseite 21 des zweiten Spiegels 20 treffen und von dort zu dem Austrittsfenster 4 umgelenkt beziehungsweise reflektiert werden.

Der erste Spiegel 13 ist im verbauten Zustand in einer Nische 22 des Deckelmoduls 3 angeordnet.

Wie in Fig. 1 zu erkennen ist, weist das Bodenmodul 7 im Ausführungsbeispiel zwei Kontaktelemente 23 und 24 auf. Diese Kontaktelemente 24 weisen streifenförmige Kontaktflächen 25 und 26 auf. Wie in Fig. 1 zu erkennen ist, sind diese Kontaktflächen 25 und 26 schräg orientiert. Dies gilt insbesondere auch in Bezug zu einer Längsachse A des Head-up-Displays 1.

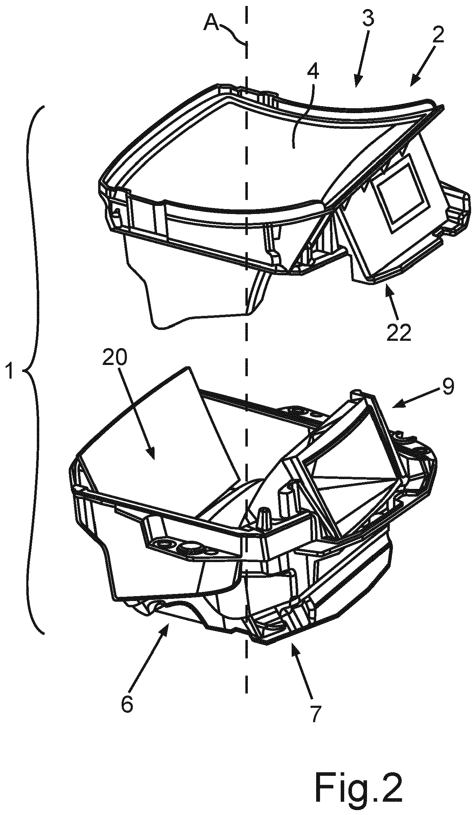

In Fig. 2 ist in einer Explosionsdarstellung das Head-up-Display 1 gezeigt. Hierbei ist das Bodenmodul 6 gezeigt und in dem Außengehäuse 7 sowohl der zweite Spiegel 20 als auch das Bauteil 9 entsprechend verbaut. Ebenso ist die Bilderzeugungseinheit 5 verbaut, die in Fig. 2 diesbezüglich nicht mehr zu erkennen ist. Ebenso ist der erste Spiegel 13 in dem Deckelmodul 3 verbaut und diesbezüglich in der Nische 22 angeordnet.

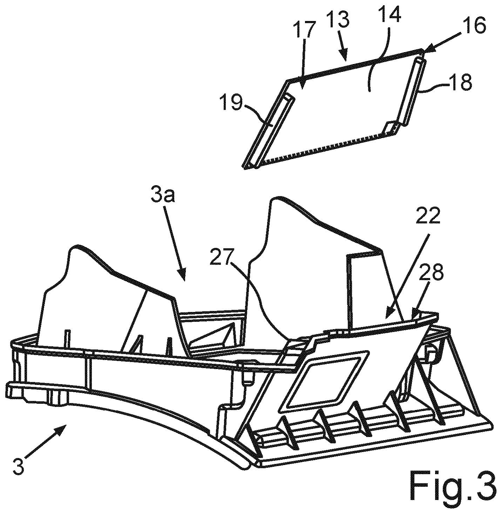

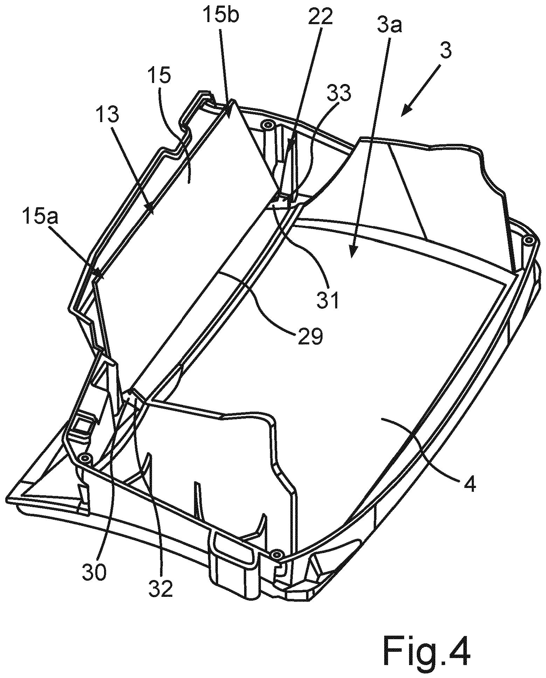

Bezüglich der Montage des Head-up-Displays 1 ist zunächst das Deckelmodul 3 vorzugsweise umgedreht, sodass es auf dem Kopf steh (siehe Fig. 3)t. Dadurch ist die Zugänglichkeit zum Inneren 3a des Deckelmoduls 3 gegeben, insbesondere von oben her gegeben. Der erste Spiegel 13 wird bereitgestellt. Diesbezüglich ist hier vorgesehen, dass die Kompressionselemente 18 und 19 bereits an den Randbereichen 16 und 17 angeordnet, insbesondere befestigt sind. Der so bereitgestellte erste Spiegel 13 wird dann in das Deckelmodul 3 eingebracht. Dazu wird ein Hineinstellen des Spiegels 13 in das Deckelmodul 3 vorgenommen. Dabei wird der Spiegel 13 mit den Kompressionselementen 18 und 19 in einer Vormontageposition angeordnet. Diesbezüglich kann in Fig. 4 in der Nische 22 eine erste Stützfläche 27 erkannt werden. Diese Stützfläche 27 kann insbesondere streifenförmig sein. Sie ist bezüglich der Längsachse A schräg gestellt. An der gegenüberliegenden Seite kann eine weitere Stützfläche 28 ausgebildet sein. Diese ist bestimmungsgemäß zum direkten Anliegen des weiteren Kompressionselements 18 vorgesehen.

In Fig. 4 ist das Deckelmodul 3 mit dem in der Vormontageposition angeordneten ersten Spiegel 13 gezeigt. In dieser Vormontageposition liegt der Spiegel 13 mit einer Randkante 29 auf hier stegartigen Auflagen 30 und 31 des Deckelmoduls 3, insbesondere der Nische 22, auf. Darüber hinaus liegen die balkenförmigen Kompressionselemente 18 und 19 an den genannten Stützflächen 27 und 28 an. Die Vormontageposition ist insbesondere dadurch charakterisiert, dass der erste Spiegel 13 lediglich in diese Nische 22 eingestellt ist und durch seine Schrägstellung geneigt positioniert ist. Wie zu erkennen ist, weisen die Auflagen 30 und 31 Erhebungen 32 und 33 auf. Dadurch ist ein Wegrutschen des ersten Spiegels auf den Auflagen 30 und 31 aus der Nische heraus vermieden. Die diesbezüglich schräg gestellte Position bleibt erhalten. Des Weiteren sind in Fig. 4 auch Randbereiche 15a und 15b der Vorderseite 15 gezeigt. Diese liegen den Randbereichen 16 und 17 der Rückseite 14 direkt gegenüber.

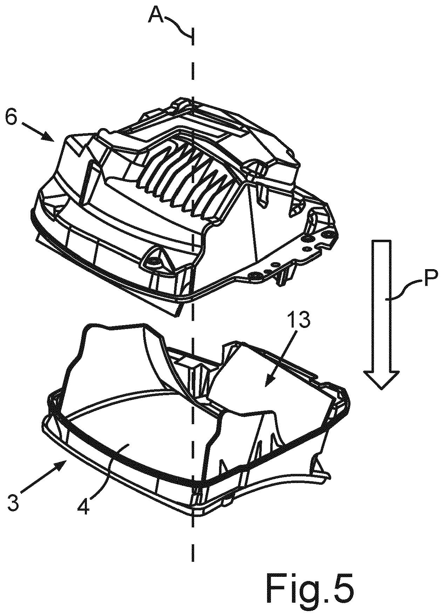

Ausgehend von diesem Zwischenmontagezustand wird dann gemäß der Darstellung in Fig. 5 das Bodenmodul 6, insbesondere wie es in einem Vormontagemodul gemäß der Darstellung in Fig. 2 bereits vorgefertigt ist, an das Deckelmodul 3 montiert. Dabei wird im Ausführungsbeispiel das Bodenmodul 6 durch eine lineare Zusammenfügungsrichtung P von oben auf das Deckelmodul 3 aufgesetzt.

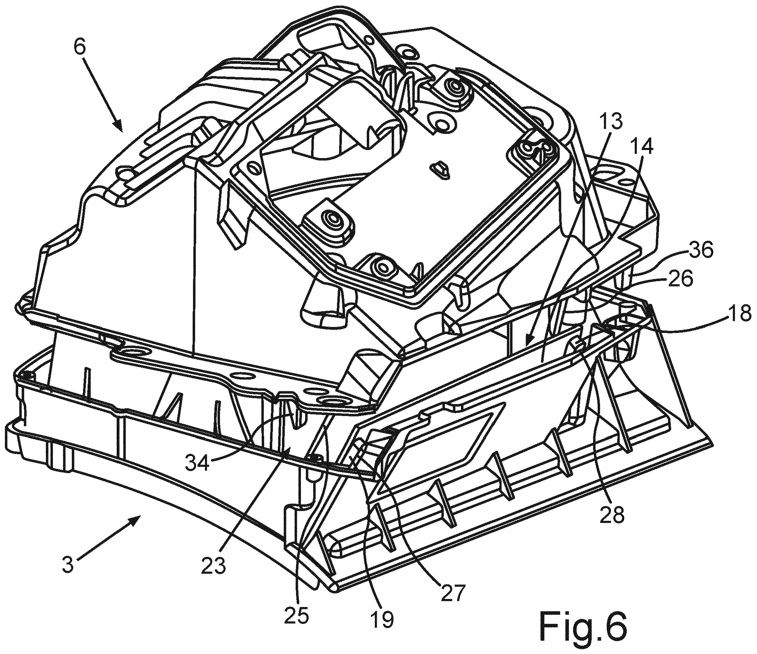

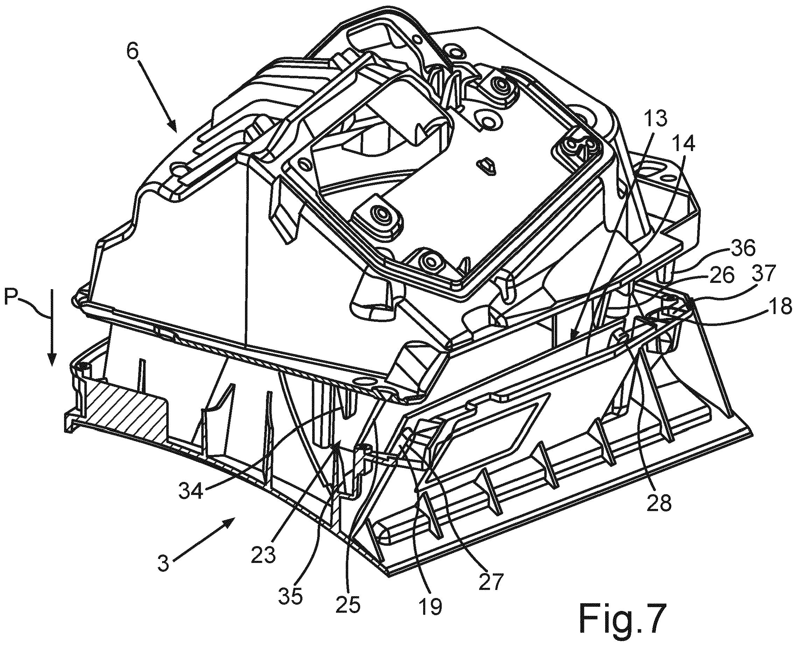

In Fig. 6 ist ausgehend von der Darstellung in Fig. 5 ein diesbezüglich bereits weiterer zusammengefügter Zustand gezeigt. Wie insbesondere in Fig. 6 auch zu erkennen ist, weist das Bodenmodul 6 ein Einführelement 34 auf. Dieses ist hier im Ausführungsbeispiel direkt an dem Kontaktelement 23 angeformt. Das Einführelement 34 ist bestimmungsgemäß zum Einführen in eine Einführaufnahme 35 (Fig. 7), die am Deckelmodul 3 ausgebildet ist, vorgesehen. Ein weiteres Einführelement 36 (Fig. 6) ist am gegenüberliegenden Ende des Bodenmoduls 6 ausgebildet. Dieses ist hier im Ausführungsbeispiel nicht direkt an dem weiteren Kontaktelement 24 ausgebildet, sondern separat und beabstandet dazu. Darüber hinaus ist eine weitere Einführaufnahme 37 gezeigt, die im Deckelmodul 3 ausgebildet ist. In Fig. 7 ist diesbezüglich eine perspektivische Schnittdarstellung gezeigt, in welcher das Deckelmodul 3 im Bereich der Einführaufnahme 35 geschnitten dargestellt ist.

Ausgehend von der in Fig. 6 erreichten Zwischenmontageposition wird das Bodenmodul 6 linear zu dem Deckelmodul 3 hin bewegt. Dabei erfolgt dann im Weiteren ein Einführen der Einführelemente 34 und 36 in die Einführaufnahmen 35 und 37. Beim Beginnen dieses Ineinandergreifens der Einführelemente 34 und 36 in die Einführaufnahmen 35 und 37 sind die Kontaktelemente 23 und 24, insbesondere die streifenförmigen Kontaktflächen 25 und 26, beabstandet zu der Vorderseite 15 des ersten Spiegels 13 angeordnet. Bei weiterem Fortführen des Einführvorgangs, bei welchem die Einführelemente 34 und 36 in die Einführaufnahmen 35 und 37 eingeführt werden, wird im Weiteren die Vorderseite 15 von den Kontaktelementen 23, 24, insbesondere den streifenförmigen Kontaktflächen 25 und 26, direkt kontaktiert. Beim dann nochmals weiteren fortgeführten Einführvorgang bewegen sich diese Kontaktelemente 23 und 24, insbesondere die direkt an der Vorderseite 13 anliegenden Kontaktflächen 25 und 26 im daran anliegenden Zustand relativ zu dieser Vorderseite 15 und insbesondere dann relativ zum Spiegel 13. Aufgrund der gewinkelten Orientierung beziehungsweise der schräggestellten Orientierung der Kontaktflächen 25 und 26 zur linearen Zusammenfügerichtung P, wie sie auch in Fig. 7 nochmals dargestellt ist, wird eine Kraft von den Kontaktelementen 23 und 24, insbesondere den Kontaktflächen 25 und 26 auf den ersten Spiegel 13 ausgeübt. Durch diese Krafteinwirkung wird dann der erste Spiegel 13 zu den Stützflächen 27 und 28 hin bewegt und dabei werden die Kompressionselemente 18 und 19 komprimiert. Die diesbezügliche Kraft wird aufgrund der schrägen Orientierung der Kontaktflächen 25 und 26 in einem Winkel ungleich 0° und ungleich 180° zur Zusammenfügerichtung P erzeugt. Aufgrund dieser linearen oder im Wesentlichen linearen Zusammenfügerichtung P wird durch eine in einem Winkel dazu orientierte Kraft der erste Spiegel 13 insbesondere ebenfalls linear oder im Wesentlichen linear bewegt, und zwar in Richtung zu diesen Stützflächen 27 und 28 hin.

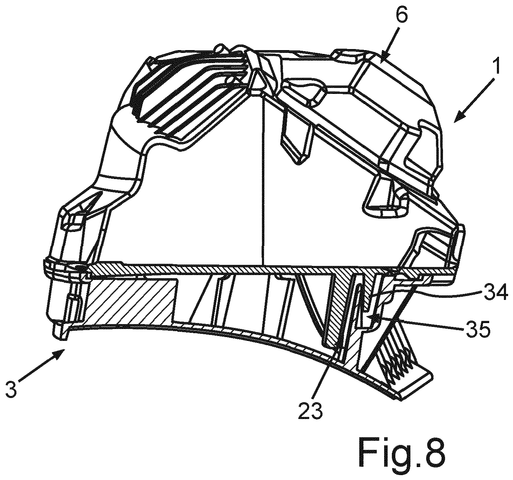

In Fig. 8 ist in einer perspektivischen Schnittdarstellung der montierte Endzustand zwischen dem Bodenmodul 6 und dem Deckelmodul 3 gezeigt. Der diesbezüglich vollständig zusammengefügte Endzustand ist gezeigt. In dem Zusammenhang ist auch zu erkennen, dass ein Einführelement 34 in die Einführaufnahme 35 eingeführt ist.

Diesbezüglich ist in Fig. 8 eine Seitenansicht der Anordnung gemäß Fig. 7 gezeigt, wobei auch hier nur der untere Bereich geschnitten dargestellt ist und das Bodenmodul 6 im oberen Bereich von der Seite her gezeigt ist. In diesem montierten Endzustand ist dann der erste Spiegel 13 in seiner Endmontageposition angeordnet. Die Kompressionselemente 18 und 19 bleiben nach dem erreichend er Endmontageposition komprimiert. Der erste Spiegel 13 ist diesbezüglich mittels der Kompressionselemente 18 und 19 mit den streifenförmigen Stützflächen 27 und 28 mechanisch kontaktiert.

Die Kontaktflächen 25, 26 und die balkenförmigen Kompressionselemente 18, 19 sind paarweise an den gegenüberliegenden Seiten 14, 15 des ersten Spiegels 13 parallel zueinander orientiert. Ein vorteilhafter Kraftpfad von den Kontaktelementen 23, 24 zu den Stützflächen 27, 28 ist dadurch gebildet.

## Patentansprüche

1. Verfahren zur Montage eines Head-up-Displays (1), aufweisend folgende Schritte:
- Bereitstellen eines ersten Spiegels (13) des Head-Up-Displays (1);
- Anbringen eines ersten, elastischen Kompressionselements (18) an einem ersten Randbereich (16) einer Rückseite (14) des ersten Spiegels (13) und Anbringen eines zweiten, elastischen Kompressionselements (19) an einem zweiten Randbereich (17) der Rückseite (14) des ersten Spiegels (13);
- Einbringen des ersten Spiegels (13) mit den daran angeordneten Kompressionselementen (18, 19) in ein Deckelmodul (3) eines Gehäuses (2) des Head-up-Displays (1) und Einstellen einer Vormontageposition des ersten Spiegels (13) in dem Deckelmodul (3), in welcher die Kompressionselemente (18, 19) an Stützflächen (27, 28) des Deckelmoduls (3) anliegen;
- Anbringen eines zum Deckelmodul (3) separaten Bodenmoduls (6) des Gehäuses (2) an dem Deckelmodul (3), wobei beim Verbinden des Bodenmoduls (6) mit dem Deckelmodul (3) eine Vorderseite (15) des ersten Spiegels (13) von Kontaktelementen (23, 24) des Bodenmoduls (6) kontaktiert wird und beim weiteren Zusammenfügen des Bodenmoduls (6) mit dem Deckelmodul (3) der erste Spiegel (13) in eine Endmontageposition gedrückt wird, wobei dazu die Kompressionselemente (18,119) komprimiert werden und der erste Spiegel (13) an die Stützflächen (27, 28) des Deckelmoduls (3) angedrückt wird.

2. Verfahren nach Anspruch 1, wobei der erste Spiegel (13) in der Vormontageposition in das Deckelmodul (3) eingestellt wird, und in einer Schrägstellung darin angeordnet wird, wobei der erste Spiegel (13) mit einer Randkante (29) auf zumindest eine Auflage (30, 31) des Deckelmoduls (2) aufgestellt wird.

3. Verfahren nach Anspruch 1 oder 2, wobei die Kompressionselemente (18, 19) als längliche Balken bereitgestellt werden, die sich über zumindest 60%, insbesondere zumindest 70%, der Länge des jeweiligen Randbereichs (16, 17) der Rückseite (14) erstrecken.

4. Verfahren nach einem der vorhergehenden Ansprüche, wobei die Kompressionselemente (18, 19) als Schaumstoffstreifen bereitgestellt werden.

5. Verfahren nach einem der vorhergehenden Ansprüche, wobei beim Verbinden des Bodenmoduls (6) mit dem Deckelmodul (3) zunächst Einführelemente (34, 36) eines Moduls (3, 6) in Einführaufnahmen (35, 37) des anderen Moduls (3, 5) eingeführt werden, wobei beim Beginnen des Ineinandergreifens der Einführelemente (34, 36) in die Einführaufnahmen (35, 37) die Kontaktelemente (23, 24) noch beabstandet zu der Vorderseite (15) des ersten Spiegels (13) angeordnet sind.

6. Verfahren nach Anspruch 5, wobei beim Fortführen des Einführvorgangs der Einführelemente (34, 36) in die Einführaufnahmen (35, 37) im Weiteren die Vorderseite (15) des ersten Spiegels (13) von den Kontaktelementen (23, 24) direkt kontaktiert wird und bei dann nochmals weiterem Einführvorgang die Kompressionselemente (18, 19) komprimiert werden und der erste Spiegel (13) in Richtung der Stützflächen (27, 28) gedrückt wird.

7. Verfahren nach Anspruch 6, wobei bei dem weiteren Einführvorgang die Kontaktelemente (23, 24), die an der Vorderseite (15) anliegen, relativ zu der Vorderseite (15) bewegt werden, und durch diese Relativbewegung eine Kraft auf den ersten Spiegel (13) erzeugt wird, die den ersten Spiegel (13) in Richtung der Stützflächen (27, 28) drückt.

8. Verfahren nach Anspruch 7, wobei die Richtung der Kraft aufgrund der schrägen Orientierung der Kontaktelemente (23, 24) in einem Winkel ungleich 0° und ungleich 180° zur Zusammenfügerichtung (P), in welcher das Bodenmodul (6) mit dem Deckelmodul (3) zusammengefügt wird, erzeugt wird.

9. Verfahren nach einem der vorhergehenden Ansprüche, wobei das Verbinden des Bodenmoduls (6) mit dem Deckelmodul (3) durch eine lineare Zusammenfügebewegung in der Zusammenfügerichtung (P) erfolgt.

10. Verfahren nach einem der vorhergehenden Ansprüche, wobei das Bodenmodul (6) mit einem einstückigen Außengehäuse (7) bereitgestellt wird und die Kontaktelemente (23, 24) an dem Außengehäuse (7) einstückig angeformt sind.

11. Verfahren nach einem der vorhergehenden Ansprüche, wobei das Bodenmodul (6) mit einem Außengehäuse (7) bereitgestellt wird und ein dazu separates Bauteil (9) zum Erzeugen einer optischen Kammer (12) in dem Head-up-Display (1) in dem Außengehäuse (7) verbaut wird und/oder ein zweiter Spiegel (20) des Head-up-Displays (1) in dem Außengehäuse (7) verbaut wird, wobei das derartig vormontierte Bodenmodul (6) mit dem Deckelmodul (3) verbunden wird.

12. Verfahren nach Anspruch 11, wobei das Bauteil (9) mit den daran angeformten Kontaktelemente (23, 24) bereitgestellt wird.

13. Head-up-Display (1) für ein Kraftfahrzeug, mit einem Gehäuse (2), das ein Deckelmodul (3) und ein Bodenmodul (6) aufweist, wobei in dem Gehäuse (2) ein erster Spiegel (13) angeordnet ist, mit welchem Licht einer Bilderzeugungseinheit (5) des Head-up-Displays (1) umgelenkt wird,
**dadurch gekennzeichnet, dass**
an Randbereichen (16, 17) einer Rückseite (14) des ersten Spiegels (13) elastische Kompressionselemente (18, 19) angeordnet sind, die im montierten Endzustand an Stützflächen (27, 28) des Deckelmoduls (3) anliegen, wobei das Bodenmodul (6) Kontaktelemente (23, 24) aufweist, die an einer zur Reflexion vorgesehenen Vorderseite (15) des ersten Spiegels (13) anliegen, so dass der erste Spiegel (13) mit einer Kraft in Richtung der Stützflächen (27, 28) beaufschlagt ist und dadurch die Kompressionselemente (18, 19) im montierten Endzustand des ersten Spiegels (13) komprimiert sind und der erste Spiegel (13) an die Stützflächen (27, 28) angedrückt ist.

14. Head-up-Display (1) nach Anspruch 13,
**dadurch gekennzeichnet, dass**
die Kontaktelemente (23, 24) streifenförmige und schräg orientierte Kontaktflächen (25, 26) aufweisen, die an Randbereichen (15a, 15b) der Vorderseite (15) direkt anliegen, die den Randbereichen (16, 17) der Rückseite (14) gegenüberliegen.

15. Head-up-Display (1) nach Anspruch 14,
**dadurch gekennzeichnet, dass**
die Kontaktflächen (25, 26) und die balkenförmigen Kompressionselemente (18, 19) paarweise an den gegenüberliegenden Seiten (14, 15) des ersten Spiegels (13) parallel zueinander orientiert sind.

## Claims

1. Method for assembling a head-up display (1), comprising the following steps:
- providing a first mirror (13) of the head-up display (1);
- attaching a first, elastic compression element (18) to a first edge region (16) of a rear side (14) of the first mirror (13) and attaching a second, elastic compression element (19) to a second edge region (17) of the rear side (14) of the first mirror (13);
- introducing the first mirror (13) with the compression elements (18, 19) arranged thereon into a cover module (3) of a housing (2) of the head-up display (1) and setting a preassembly position of the first mirror (13) in the cover module (3), in which the compression elements (18, 19) rest against supporting surfaces (27, 28) of the cover module (3);
- attaching a base module (6) of the housing (2), which is separate from the cover module (3), to the cover module (3), wherein, as the base module (6) is connected to the cover module (3), a front side (15) of the first mirror (13) is contacted by contact elements (23, 24) of the base module (6), and, as the base module (6) continues to be joined to the cover module (3), the first mirror (13) is pressed into a final assembly position, wherein, for this purpose, the compression elements (18, 119) are compressed and the first mirror (13) is pressed against the supporting surfaces (27, 28) of the cover module (3).

2. Method according to Claim 1, wherein the first mirror (13) is set in the preassembly position in the cover module (3) and is arranged therein in an oblique setting, wherein the first mirror (13) is set up with a peripheral edge (29) on at least one support (30, 31) of the cover module (2).

3. Method according to Claim 1 or 2, wherein the compression elements (18, 19) are provided as elongate beams which extend over at least 60%, in particular at least 70%, of the length of the respective edge region (16, 17) of the rear side (14).

4. Method according to one of the preceding claims, wherein the compression elements (18, 19) are provided as foam strips.

5. Method according to one of the preceding claims, wherein, as the base module (6) is connected to the cover module (3), insertion elements (34, 36) of one module (3, 6) are first inserted into insertion receptacles (35, 37) of the other module (3, 5), wherein, as the insertion elements (34, 36) begin to interlock in the insertion receptacles (35, 37), the contact elements (23, 24) are still arranged at a distance from the front side (15) of the first mirror (13).

6. Method according to Claim 5, wherein, as the insertion process of the insertion elements (34, 36) into the insertion receptacles (35, 37) continues, the front side (15) of the first mirror (13) is furthermore contacted directly by the contact elements (23, 24) and, as the insertion process then continues further, the compression elements (18, 19) are compressed and the first mirror (13) is pressed in the direction of the supporting surfaces (27, 28).

7. Method according to Claim 6, wherein, as the insertion process continues, the contact elements (23, 24), which rest against the front side (15), are moved relative to the front side (15), and this relative movement generates a force on the first mirror (13) which presses the first mirror (13) in the direction of the supporting surfaces (27, 28).

8. Method according to Claim 7, wherein the oblique orientation of the contact elements (23, 24) results in the direction of the force being generated at an angle not equal to 0° and not equal to 180° to the joining direction (P) in which the base module (6) is joined to the cover module (3).

9. Method according to one of the preceding claims, wherein the base module (6) is connected to the cover module (3) by a linear joining movement in the joining direction (P).

10. Method according to one of the preceding claims, wherein the base module (6) is provided with an integral outer housing (7), and the contact elements (23, 24) are formed integrally on the outer housing (7).

11. Method according to one of the preceding claims, wherein the base module (6) is provided with an outer housing (7), and a component (9) separate therefrom for producing an optical chamber (12) in the head-up display (1) is installed in the outer housing (7), and/or a second mirror (20) of the head-up display (1) is installed in the outer housing (7), wherein the base module (6) preassembled in this way is connected to the cover module (3).

12. Method according to Claim 11, wherein the component (9) is provided with the contact elements (23, 24) formed integrally thereon.

13. Head-up display (1) for a motor vehicle, having a housing (2) which has a cover module (3) and a base module (6), wherein a first mirror (13), by means of which light from an image generation unit (5) of the head-up display (1) is deflected, is arranged in the housing (2),
**characterized in that**
elastic compression elements (18, 19), which, in the assembled final state, rest against supporting surfaces (27, 28) of the cover module (3), are arranged on edge regions (16, 17) of a rear side (14) of the first mirror (13), wherein the base module (6) has contact elements (23, 24), which rest against a front side (15), provided for reflection, of the first mirror (13), such that the first mirror (13) is subjected to a force in the direction of the supporting surfaces (27, 28), and, as a result, the compression elements (18, 19) are compressed in the assembled final state of the first mirror (13), and the first mirror (13) is pressed against the supporting surfaces (27, 28).

14. Head-up display (1) according to Claim 13,
**characterized in that**
the contact elements (23, 24) have strip-shaped and obliquely oriented contact surfaces (25, 26) which rest directly against edge regions (15a, 15b) of the front side (15), which lie opposite the edge regions (16, 17) of the rear side (14).

15. Head-up display (1) according to Claim 14,
**characterized in that**
the contact surfaces (25, 26) and the beam-shaped compression elements (18, 19) are oriented parallel to one another in pairs on the opposite sides (14, 15) of the first mirror (13).

## Revendications

1. Procédé de montage d'un affichage tête haute (1), présentant les étapes suivantes :
- la fourniture d'un premier miroir (13) de l'affichage tête haute (1) ;
- la mise en place d'un premier élément de compression élastique (18) sur une première zone de bord (16) d'un côté arrière (14) du premier miroir (13) et la mise en place d'un deuxième élément de compression élastique (19) sur une deuxième zone de bord (17) du côté arrière (14) du premier miroir (13) ;
- l'introduction du premier miroir (13) avec les éléments de compression (18, 19) agencés sur celui-ci dans un module de couvercle (3) d'un boîtier (2) de l'affichage tête haute (1) et le réglage d'une position de prémontage du premier miroir (13) dans le module de couvercle (3), dans laquelle les éléments de compression (18, 19) s'appliquent sur des surfaces d'appui (27, 28) du module de couvercle (3) ;
- la mise en place d'un module de fond (6) du boîtier (2), séparé du module de couvercle (3), sur le module de couvercle (3) ; lors de la liaison du module de fond (6) au module de couvercle (3), un côté avant (15) du premier miroir (13) venant en contact avec des éléments de contact (23, 24) du module de fond (6) et, lors de l'assemblage ultérieur du module de fond (6) avec le module de couvercle (3), le premier miroir (13) étant poussé dans une position de montage finale, les éléments de compression (18, 119) étant pour cela comprimés et le premier miroir (13) étant poussé contre les surfaces d'appui (27, 28) du module de couvercle (3).

2. Procédé selon la revendication 1, dans lequel le premier miroir (13) est réglé dans la position de prémontage dans le module de couvercle (3), et est agencé dans une position inclinée dans celui-ci, le premier miroir (13) étant placé avec un bord marginal (29) sur au moins un support (30, 31) du module de couvercle (2).

3. Procédé selon la revendication 1 ou 2, dans lequel les éléments de compression (18, 19) sont fournis sous forme de barres allongées qui s'étendent sur au moins 60 %, notamment au moins 70 %, de la longueur de la zone de bord respective (16, 17) du côté arrière (14).

4. Procédé selon l'une quelconque des revendications précédentes, dans lequel les éléments de compression (18, 19) sont fournis sous forme de bandes de mousse.

5. Procédé selon l'une quelconque des revendications précédentes, dans lequel, lors de la liaison du module de fond (6) au module de couvercle (3), des éléments d'insertion (34, 36) d'un module (3, 6) sont d'abord insérés dans des logements d'insertion (35, 37) de l'autre module (3, 5), les éléments de contact (23, 24) étant encore agencés à distance du côté avant (15) du premier miroir (13) au début de l'emboîtement des éléments d'insertion (34, 36) dans les logements d'insertion (35, 37).

6. Procédé selon la revendication 5, dans lequel, lors de la poursuite de l'opération d'insertion des éléments d'insertion (34, 36) dans les logements d'insertion (35, 37), le côté avant (15) du premier miroir (13) vient ensuite directement en contact avec les éléments de contact (23, 24) et, lors de l'opération d'insertion encore ultérieure, les éléments de compression (18, 19) sont comprimés et le premier miroir (13) est poussé en direction des surfaces d'appui (27, 28).

7. Procédé selon la revendication 6, dans lequel, lors de l'opération d'insertion ultérieure, les éléments de contact (23, 24) qui s'appliquent sur le côté avant (15) sont déplacés par rapport au côté avant (15), et ce mouvement relatif produit une force sur le premier miroir (13) qui pousse le premier miroir (13) en direction des surfaces d'appui (27, 28).

8. Procédé selon la revendication 7, dans lequel la direction de la force est produite en raison de l'orientation oblique des éléments de contact (23, 24) selon un angle différent de 0° et différent de 180° par rapport à la direction d'assemblage (P) dans laquelle le module de fond (6) est assemblé avec le module de couvercle (3).

9. Procédé selon l'une quelconque des revendications précédentes, dans lequel la liaison du module de fond (6) au module de couvercle (3) est réalisée par un mouvement d'assemblage linéaire dans la direction d'assemblage (P).

10. Procédé selon l'une quelconque des revendications précédentes, dans lequel le module de base (6) est fourni avec un boîtier extérieur (7) d'une seule pièce et les éléments de contact (23, 24) sont formés d'une seule pièce sur le boîtier extérieur (7).

11. Procédé selon l'une quelconque des revendications précédentes, dans lequel le module de fond (6) est fourni avec un boîtier extérieur (7) et un composant (9) séparé de celui-ci pour produire une chambre optique (12) dans l'affichage tête haute (1) est installé dans le boîtier extérieur (7) et/ou un deuxième miroir (20) de l'affichage tête haute (1) est installé dans le boîtier extérieur (7), le module de fond (6) ainsi prémonté étant relié au module de couvercle (3).

12. Procédé selon la revendication 11, dans lequel le composant (9) est fourni avec les éléments de contact (23, 24) formés sur celui-ci.

13. Affichage tête haute (1) pour un véhicule automobile, avec un boîtier (2) qui présente un module de couvercle (3) et un module de fond (6), un premier miroir (13) étant agencé dans le boîtier (2), avec lequel la lumière d'une unité de génération d'image (5) de l'affichage tête haute (1) est déviée,
**caractérisé en ce que**
des éléments de compression élastiques (18, 19) sont agencés sur des zones de bord (16, 17) d'un côté arrière (14) du premier miroir (13), lesquels s'appliquent à l'état final monté sur des surfaces d'appui (27, 28) du module de couvercle (3), le module de fond (6) présentant des éléments de contact (23, 24) qui s'appliquent sur un côté avant (15) du premier miroir (13) prévu pour la réflexion, de telle sorte que le premier miroir (13) est soumis à une force en direction des surfaces d'appui (27, 28) et, de ce fait, les éléments de compression (18, 19) sont comprimés dans l'état final monté du premier miroir (13) et le premier miroir (13) est poussé contre les surfaces d'appui (27, 28).

14. Affichage tête haute (1) selon la revendication 13, **caractérisé en ce que**
les éléments de contact (23, 24) présentent des surfaces de contact (25, 26) en forme de bande et orientées en oblique, qui s'appliquent directement sur des zones de bord (15a, 15b) du côté avant (15), qui sont opposées aux zones de bord (16, 17) du côté arrière (14).

15. Affichage tête haute (1) selon la revendication 14, **caractérisé en ce que**
les surfaces de contact (25, 26) et les éléments de compression en forme de barre (18, 19) sont orientés parallèlement les uns aux autres par paires sur les côtés opposés (14, 15) du premier miroir (13).
